# EUROPEAN PATENT APPLICATION

(11) **EP 1 650 756 A2**
(43) Date of publication of application: **26.04.2006**
(21) Application number: 05106757.7
(22) Date of filing: 22.07.2005
(51) Int. Cl.: G11B 20/00

(54) **Read/write device, and format management method of read/write device**

(30) Priority: 27.08.2004 JP 2004247968
(71) Applicant: Hitachi Global Storage Technologies Netherlands B.V., 1076 AZ Amsterdam (NL)
(72) Inventor: Ogawa, Hitoshi, Kanagawa-ken, Kozu 2880 (JP); Ishida, Yoshiteru, Kanagawa-ken, Kozu 2880 (JP); Takashi, Terumi, Kanagawa-ken, Kozu 2880 (JP)
(74) Representative: Kirschner, Klaus Dieter

(57) **Abstract**

An object of the present invention is to provide a technique for carrying out work in a short time to prevent without fail data stored in a read/write device from leaking to persons other than an authorized user. There are provided a read/write device, and a format management method for managing a format of data stored in the read/write device. A given change factor is specified for a format of data stored in the read/write device. A format change judgment part (101) for judging whether or not the change factor exists is provided in the read/write device or in a host device connected to the read/write device. Then, a given offset coefficient is generated (102) for a format table (107) according to an instruction from a format change judgment part (101), and a different format table is generated according to the generated offset coefficient and the format table.

## Description

The present invention relates to a read/write device having a rotating recording medium, and more particularly to a technique for preventing data stored in the read/write device from leaking.

A life cycle of a product equipped with a read/write device having a rotating recording medium is becoming shorter. Therefore, a recycling market of read/write devices is expanding. However, a problem arising when a product equipped with a read/write device is brought to such a recycling market is that data stored in the read/write device by a user is not completely erased, and consequently the data leaks to outsiders. This is because even if data stored in the read/write device is erased in a usual manner, what is erased is only management information of the data stored in the read/write device. In other words, the data itself is kept stored in the read/write device. The data itself can be restored by use of dedicated software, which is made use of by users who wish to restore data that has been erased by mistake. On the other hand, software for completely erasing data is also on sale. This software is used to prevent stored data from being viewed by outsiders. This software completely erase data by writing reliable random data to all areas of the read/write device a plurality of times.

Here, there is disclosed a technique for completely erasing data stored in a read/write device included in a host device by connecting the host device to a network to receive an erase program from this network. Such a technique is disclosed in Japanese Patent Laid-open No. 2003-256283, for example. In addition, a technique is known in which if an audience wants to rent and view a content, the content stored in a content server is received through a network, or the like, and the content received by the audience is then stored in a read/write device so that the audience can view the content freely during a permitted rental period. In this case, when the rental period has expired, it is necessary to erase the content stored in the read/write device without fail in order to avoid unauthorized use. One of the method for satisfying the above necessity is a technique in which a content server carries out period management, and on the termination of the rental period, it gives an instruction to erase the content to the read/write device storing the content. Such a technique is disclosed in Japanese Patent Laid-open No. 2003-186751, for example.

All of the above-mentioned techniques disclosed in the patent documents relate to erasing of stored data in a read/write device by writing to the whole area so as to completely prevent the data from leaking. However, because the capacity of a storage medium is recently becoming larger and larger, the length of time (unit of time) required to completely erase data stored in one read/write device remarkably increases. In particular, it is not efficient to completely erase data stored in all read/write devices connected to host devices by the techniques described above because for example a company has a large number of read/write devices connected to host devices.

On the other hand, as a result of worrying about the leakage of data, if a read/write device only is disposed of to replace it with a new read/write device, it is not possible to effectively make use of an asset value of the read/write device that can be still made full use of from the viewpoint of the performance thereof. Further, the disposal of the read/write device also has a bad influence on the environment, which is a matter that goes against the current of the times. Moreover, when recycling products to which a read/write device is applied, the above disposal results in an increase in cost required to replace with a new read/write device for the next user. This extremely impairs the worth of recycling products, one of the large advantages of which is a low cost. Additionally, there is another case. Although it is not necessary to erase content data stored in a read/write device, reading of the content must be completely disallowed because the rental period has expired. However, according to the prior art, the content data stored in the read/write device is erased, and therefore if the same content is rent again, the unnecessary time is required to write the content again. This produces a problem of requiring writing equipment and the writing time. Further, if a medium used in a read/write device is a rental removable medium, when a user intends to legally view the same content next time, there also arises a similar problem.

This object is achieved by the A read/write device and the method of the independant claims. Advantageous embodiments of the invention are characterized in the sub-claims.

The present invention provides a technique for carrying out work in a short time to prevent without fail data stored in a read/write device from leaking to persons other than an authorized user. In addition, the present invention also provides a technique for, after having disallowed access to data stored in a read/write device once, permitting only an authorized user to access again the data stored in the read/write device.

There are provided a read/write device, and a format management method for managing a format of data stored in the read/write device. A given change factor is specified for a format of data stored in the read/write device. A format change judgment part for judging whether or not the change factor exists is provided in the read/write device or in a host device connected to the read/write device. Then, a given offset coefficient is generated for a format table according to an instruction from a format change judgment part, and a different format table is generated according to the generated offset coefficient and the format table.

According to the present invention, it is possible to carry out work in a short time to prevent without fail data stored in a read/write device from leaking to persons other than an authorized user.

Preferred embodiments of the invention are now described with reference to the drawings in which:
Fig. 1 is a diagram illustrating a configuration of a FORMAT management part of a magnetic disk drive according to an embodiment.
Fig. 2 is a flowchart illustrating operation steps of the FORMAT management part shown in Fig. 1.
Fig. 3 is a flowchart illustrating operation steps of an OFFSET coefficient generation part 102 and a generated coefficient history checking part 103 in the FORMAT management part shown in Fig. 1.
Fig. 4 is a flowchart illustrating operation steps of a FORMAT basic TABLE selection part 104 of the FORMAT management part.
Fig. 5 is a flowchart illustrating operation steps of a FORMAT TABLE generation part 106 of the FORMAT management part.
Figs. 6(a), 6(b), 6(c) are diagrams illustrating how a FORMAT TABLE corresponding to the operation in Fig. 5 is changed.
Fig. 7 is a diagram illustrating in detail a FORMAT of the magnetic disk drive.
Fig. 8 illustrates in detail a FORMAT basic TABLE for managing the FORMAT shown in Fig. 7.
Fig. 9 illustrates examples of FORMAT change factors.
Fig. 10 is a flowchart illustrating protocol procedures by which the magnetic disk drive makes a judgment as to whether or not a host device is allowed to access the magnetic disk drive.
Fig. 11 is a diagram illustrating a configuration of a magnetic disk drive according to this embodiment.
Fig. 12 is a diagram illustrating an example of the FORMAT TABLE generation.
Fig. 13 is a diagram illustrating an example of the FORMAT TABLE generation.
Fig. 14 is a diagram illustrating an example of the FORMAT TABLE generation.
Fig. 15 is a diagram illustrating an example of the FORMAT TABLE generation.

An embodiment of the present invention will be described by use of a magnetic disk drive as an example of a read/write device.

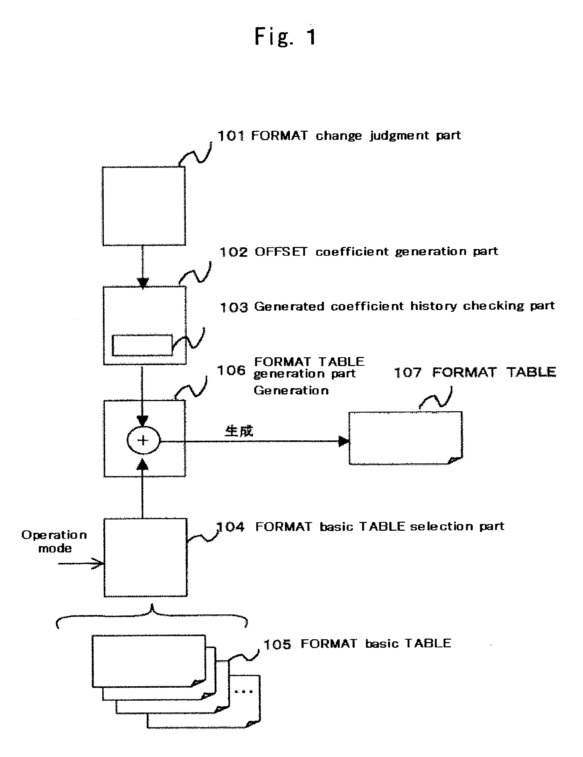

Fig. 1 is a diagram illustrating a configuration of a FORMAT management part of a magnetic disk drive according to this embodiment.

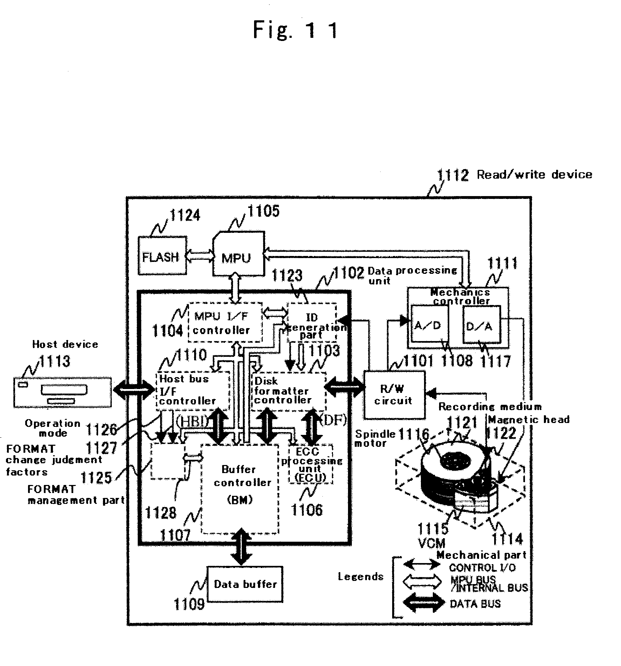

A FORMAT change judgment part 101 judges whether or not it is necessary to make a FORMAT change. The FORMAT change judgment part 101 can be provided in a FORMAT management part 1125 of a data processing unit 1102 of a magnetic disk drive shown in Fig. 11, which will be described later. Because whether it is necessary to make a FORMAT change is judged in cooperation with a host device 1113, the FORMAT change judgment part 101 may also be provided on the host device side. Incidentally, if the FORMAT of the magnetic disk drive is specifically described, for example, one sector, which is a unit of data recording, is equivalent to 512 or 520 bytes. The details thereof will be described later.

An OFFSET coefficient generation part 102 generates an OFFSET coefficient used for a FORMAT basic TABLE that is selected from among FORMAT basic TABLEs 105 described later in which each magnetic disk drive is in advance associated with a FORMAT to be adopted by the magnetic disk drive. Here, if the correction capability of ECC is for example 35 bytes at the maximum, a number larger than 35 bytes may also be uniquely selected as the OFFSET coefficient. The OFFSET coefficient may also be generated at random so as to disable users to infer it.

The OFFSET coefficient and how the OFFSET coefficient is generated will be detailed later. The OFFSET coefficient generation part 102 comprises a generated coefficient history checking part 103 capable of checking a change history. The FORMAT basic TABLEs 105 contain FORMATs that can be adopted by the magnetic disk drive. The FORMAT basic TABLE selection part 104 selects a specified FORMAT from the FORMAT basic TABLEs 105 according to an operation mode.

Here, the operation mode instructs a FORMAT adopted by the magnetic disk drive. The operation mode is information determined by the host device as described later. For the magnetic disk drive, the host device specifies the information by use of a predetermined protocol such as the ATA protocol. As a matter of course, the information may also be determined by a jumper pin, which is set in advance by a user. In this case, the magnetic disk drive is originally provided with the jumper pin.

A FORMAT TABLE generation part 106 generates a FORMAT TABLE 107 from the FORMAT basic TABLE, and from the OFFSET coefficient generated by the OFFSET coefficient generation part 102. The FORMAT basic TABLE has been selected by the FORMAT basic TABLE selection part 104 from among the FORMAT basic TABLEs 105. This FORMAT TABLE 107 is a FORMAT differing from that for a fixed period of time predetermined in the past. Incidentally, the FORMAT basic TABLEs 105 have only to be stored in a FLASH 1124 that stores a control program of a MPU 1105 for controlling the magnetic disk drive 1112 shown in Fig. 11 described later. In addition, the generated FORMAT TABLE 107 have only to be stored in a data buffer 1109 shown in Fig. 11 described later. Moreover, the generated FORMAT TABLE 107 may also be stored in an ID generation part 1123 shown in Fig. 11 described later. The ID generation part 1123 directly makes use of this FORMAT TABLE. Any storing method may be used so long as it is possible to restore the FORMAT basic TABLEs 105 and the FORMAT TABLE 107.

Thus, the FORMAT management part shown in Fig. 1 is configured to generate the FORMAT TABLE 107 by which data stored in the magnetic disk cannot be easily read out. As a result, it becomes possible to carry out the work in a short time to prevent without fail the stored data from being read out, and thereby to solve the problem of the leakage of data in a short time and at low cost.

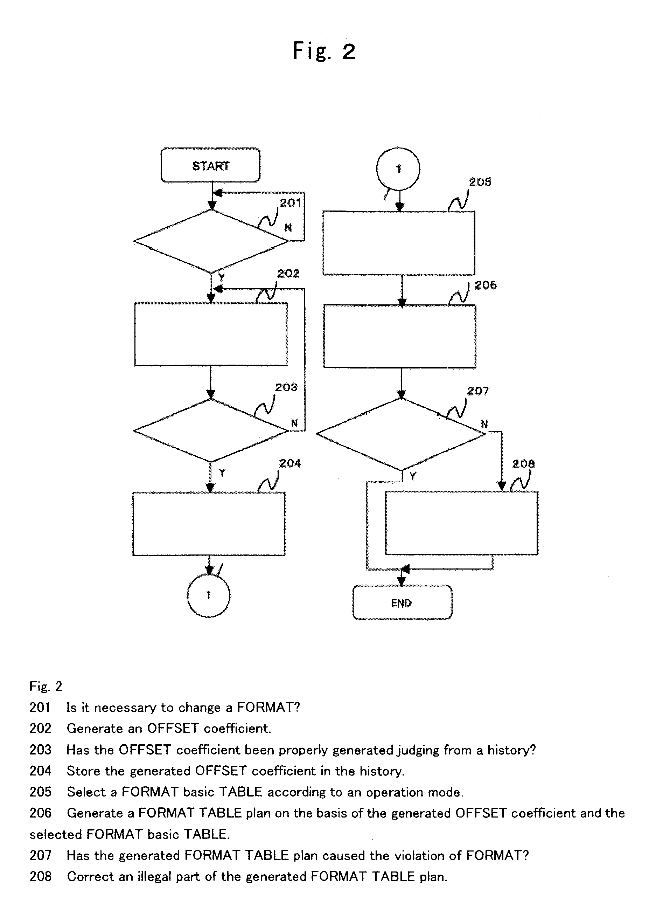

Fig. 2 is a flowchart illustrating operation steps of the FORMAT management part shown in Fig. 1.

The FORMAT change judgment part 101 makes a judgment whether or not a FORMAT needs to be changed (201).

If it is judged that the FORMAT needs to be changed, the OFFSET coefficient generation part 102 generates an OFFSET coefficient (202).

Then, the generated coefficient history checking part 103 in the OFFSET coefficient generation part 102 checks whether or not, by use of the correction capability of ECC, the OFFSET coefficient generated by the OFFSET coefficient generation part 102 can read out data previously stored in the magnetic disk drive (203). If the OFFSET coefficient can correct the data, an OFFSET coefficient is generated again. If the OFFSET coefficient cannot correct the data, a history entry of the OFFSET coefficient is performed in the generated coefficient history checking part 103 (204).

Here, in order to keep the OFFSET coefficient stored, whose history entry has been performed, the generated coefficient history checking part 103 is provided with a memory function capable of holding a value of the OFFSET coefficient even when the power supply is turned off. In addition, the OFFSET coefficient whose history entry has been performed may also be store in the FLASH 1124 or a recording medium 1121, which is a memory unit that can be accessed by the MPU 1105 for controlling the magnetic read/write device 1112 shown in Fig. 11 described later. It is to be noted that the FLASH 1124 is a memory unit in which a value is held even when the power supply is turned off. Needless to say, it is devised that the held value can be checked when the generated coefficient history checking part 103 operates.

If the number of OFFSET coefficient entries exceeds the upper limit, stored data has only to be deleted in the predetermined order. However, the RING memory method, in which data stored as the oldest history entry is deleted first, may also be adopted so as to read out the newest possible data.

The FORMAT basic TABLE selection part 104 selects an appropriate FORMAT basic TABLE from among the FORMAT basic TABLEs 105 according to an operation mode (205).

The FORMAT TABLE generation part 106 generates a FORMAT TABLE plan on the basis of the generated OFFSET coefficient and the selected FORMAT basic TABLE (206).

The FORMAT TABLE generation part 106 checks whether or not the generated FORMAT TABLE plan produces an illegal FORMAT that is not permitted as a FORMAT, for example, a data sector and a servo sector area overlap each other (207).

When the illegality of the FORMAT plan is detected, the FORMAT TABLE generation part 106 corrects an illegal part of the FORMAT TABLE plan, and then generates the FORMAT TABLE 107 that is not an illegal FORMAT (208).

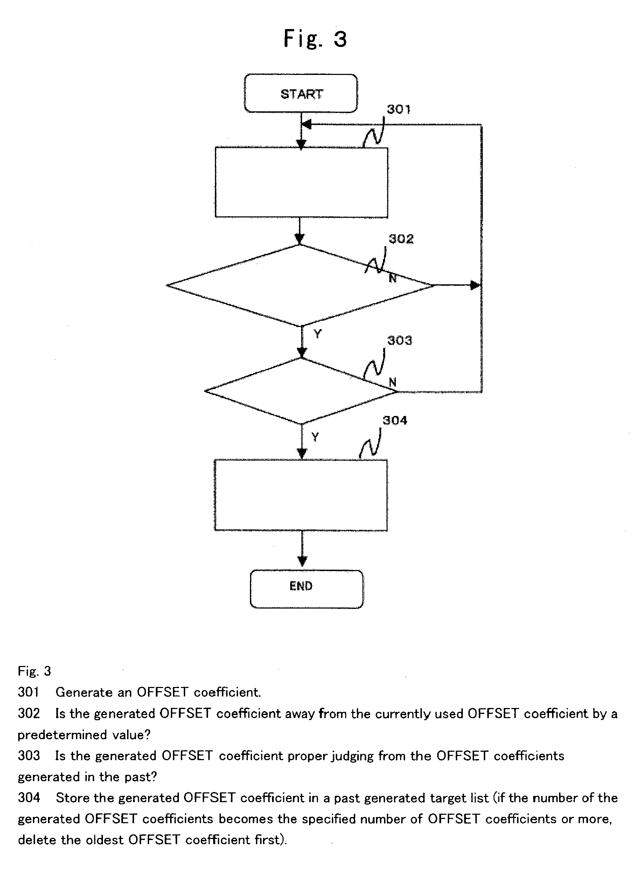

Fig. 3 is a flowchart illustrating operation steps of the OFFSET coefficient generation part 102 and generated coefficient history checking part 103 of the FORMAT management part shown in Fig. 1.

As a result of the judgment made by the FORMAT change judgment part 101, if the OFFSET coefficient generation part 102 receives an instruction to change a FORMAT, the OFFSET coefficient generation part 102 generates an OFFSET coefficient (301).

A check is made as to whether or not the generated OFFSET coefficient is away from the OFFSET coefficient used for the current FORMAT by a predetermined numerical value. Further, another check is made as to whether or not the generated OFFSET coefficient is illegal, for example, whether it is an numerical value that overlaps the next sector (302). Here, this predetermined numerical value is a value that can be corrected by the disk drive with the ECC correction capability. In another case, the severest numerical value, i.e., the smallest numerical value, determined by judging from various conditions, in which current stored data can be read out, may also be used as a specified value of the predetermined numerical value. The above conditions include a case where even if a data FORMAT stored in the disk drive is changed, circuit synchronization of a R/W channel is achieved by a write pattern, causing stored data to be read out. If this specified value is not satisfied, the OFFSET coefficient is generated again.

If this specified value is satisfied, a check is made from the history as to whether a value of the generated OFFSET coefficient is recently used (303). This makes it possible to prevent the past OFFSET coefficient from being read out as a result of repeatedly making a FORMAT change. Also in the case where this condition is not satisfied, the OFFSET coefficient is generated again. If this condition is satisfied, the generated value of the generated OFFSET coefficient is stored in a past generated target list of the generated coefficient history checking part 103.

Incidentally, this embodiment adopts the RING memory method in which when the capacity of storing a history becomes insufficient, the oldest entry is first deleted. However, this deletion rule may be changed according to a purpose.

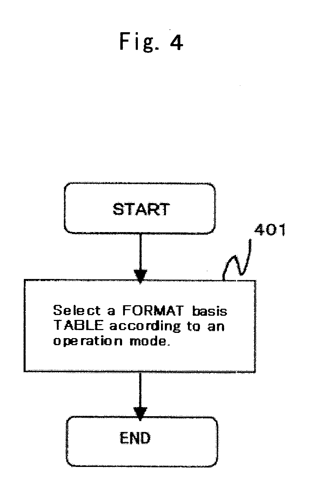

Fig. 4 is a flowchart illustrating operation steps of the FORMAT basic TABLE selection part 104 of the FORMAT management part.

According to a FORMAT which is predetermined in the magnetic disk drive, or which is specified by a user in advance in the magnetic disk drive, the FORMAT basic TABLE selection part 104 selects an appropriate FORMAT TABLE from among the FORMAT basic TABLEs 105 that are provided beforehand in the magnetic disk drive (401).

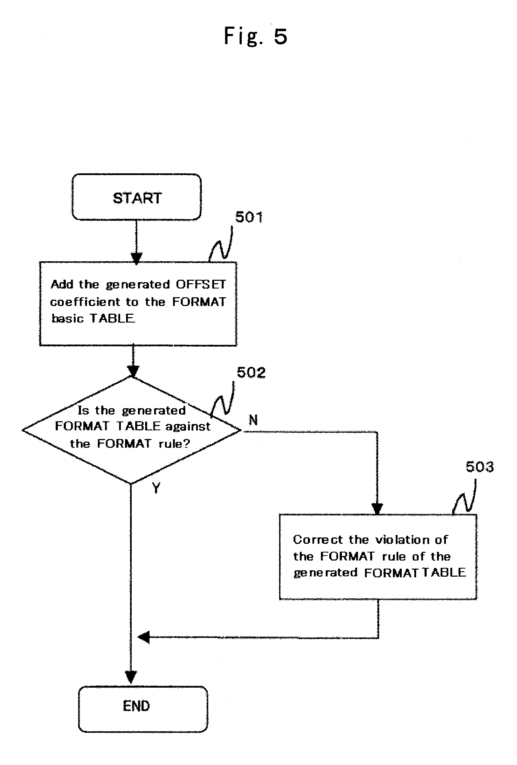

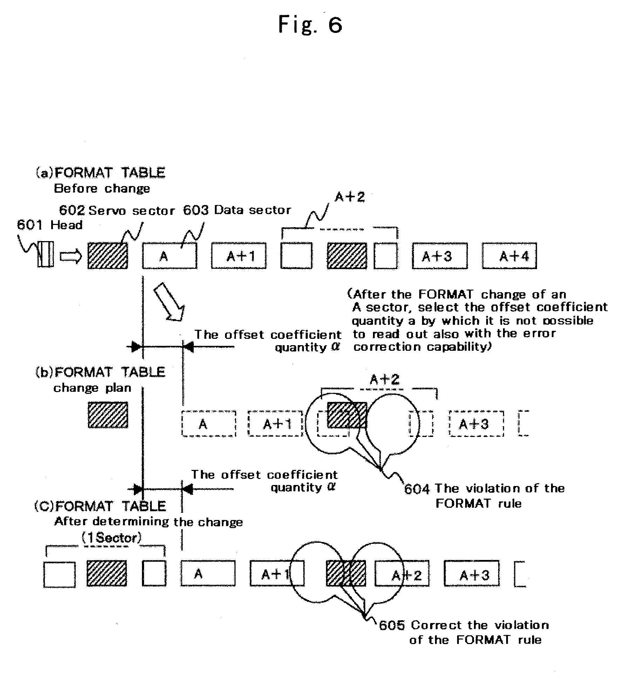

Fig. 5 is a flowchart illustrating operation steps of the FORMAT TABLE generation part 106 of the FORMAT management part. Figs. 6(a), 6(b), 6(c) are diagrams illustrating how a FORMAT TABLE corresponding to the operation in Fig. 5 is changed. Operation of the FORMAT TABLE generation part 106 will below be described with reference to Figs. 5 and 6(a), 6(b), 6(c).

A FORMAT (FORMAT TABLE before changing a FORMAT) of the magnetic disk drive includes a servo sector 602 and data sectors 603, as shown in Fig. 6(a). The servo sector 602 is used to store information required to position a head 601, which is used to read and write data, at a target position on a recording medium. The data sectors 603 are each used to store actual user data. Although data sectors A and A + 1 exist between servo sectors, a data sector A + 2 extends over the servo sector, with the result that the data sector A + 2 is placed before and after the servo sector. Here, such a data sector is called a split data sector. The FORMAT basic TABLEs 105 are FORMAT information required to achieve in the disk drive the control including a split data sector. As shown in Fig. 6(b), in a FORMAT TABLE change plan, an OFFSET coefficient generated by the OFFSET coefficient generation part 102 is α.

To be more specific, the OFFSET coefficient α is added to the FORMAT basic TABLE (the FORMAT basic TABLE before changing the FORMAT) shown in Fig. 6(a), which has been selected by the FORMAT basic TABLE selection part 104. Then, the FORMAT TABLE change plan shown in Fig. 6(b) is generated (501).

Here, it is so devised that if the OFFSET coefficient is equivalent to 0, a servo sector and a data sector do not interfere with each other so that the selected FORMAT basic TABLE can be made use of just as it is as a FORMAT TABLE. Therefore, if the data sector A + 2 interferes with a servo sector, the FORMAT TABLE change plan shown in Fig. 6(b) is against the FORMAT rule. Accordingly, as shown in Fig. 6(c), correcting the violation of the FORMAT rule permits the FORMAT TABLE to be used as a FORMAT TABLE after change.

In the FORMAT TABLE generation part 106, a check is made as to whether or not the FORMAT TABLE change plan shown in Fig. 6(b) is against the FORMAT rule (502). If the FORMAT TABLE change plan is against the FORMAT rule, the violation of the FORMAT rule is corrected (503). This makes it possible to generate a new FORMAT TABLE 107 free from the violation of the FORMAT rule.

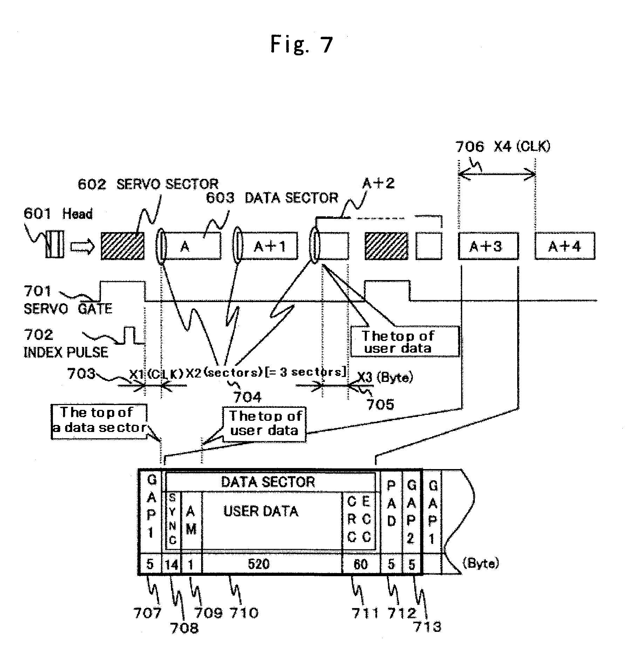

Fig. 7 is a diagram illustrating in detail a FORMAT of the magnetic disk drive. In Fig. 7, a servo gate 701 is a timing signal indicating a servo sector period. The timing signal is generated by a control circuit of the magnetic disk drive from timing of a servo sector 602 read out by the head 601. According to this timing, the control circuit positions the head 601 on a medium by use of the servo sector information that has been read out from the medium by the head 601.

Although it is not illustrated, a signal which is called index information is written to a servo sector. This index information is reference information included only in one servo sector per track. When a circuit of the disk drive detects the index information, an index pulse signal 702 is generated. The index pulse signal 702 is utilized as an operation criterion of the circuit.

The FORMAT of the data sector further comprises: a gap area 707 to which no data is written; a SYNC area 708 to which a pattern used for circuit synchronization at the time of reading is written; an address mark area 709 indicating that a subsequent area thereof is user data; a user data area 710; a CRC area and an ECC area 711 that are codes used for detection (CRC) and correction (ECC) in the event that a defect of user data occurs; a PAD area 712 used to absorb the fluctuations in rotation of a medium; and a gap area 713. Here, a GAP 1 is the same as a GAP 2. However, taking the FORMAT TABLE management into consideration, these GAP areas are separately treated as a matter of convenience. In addition, a data sector is constituted of the SYNC area 708, the address mark area 709, the user data area 710, and the CRC and ECC areas 711. The head 601 writes to those areas on a recording medium. Although Fig. 7 shows an example of specific numerical values of the number of bytes required for the above-mentioned areas, this is merely a reference example. From the viewpoint of the design of the magnetic disk drive, these values can be changed if necessary.

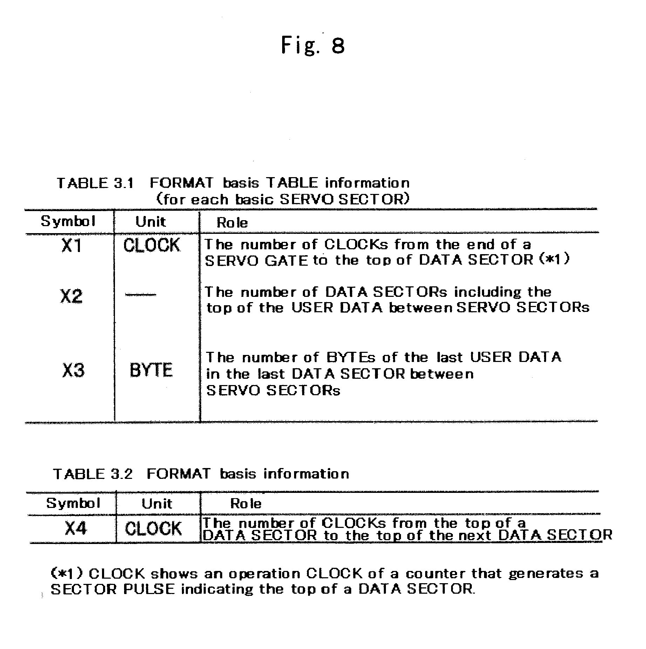

Fig. 8 illustrates in detail a FORMAT basic TABLE for managing the FORMAT shown in Fig. 7.

Symbol X1 indicates a point of time at which the data sector starts after the servo gate 701 is negated. A unit of X1 is a clock, which corresponds to reference numeral 703 in Fig. 7. Symbol X2 indicates the number of data sectors, each of which includes the top of data, between servo sectors. Symbol X2 corresponds to reference numeral 704 in Fig. 7. Symbol X3 indicates the number of bytes of user data written to the data sector A + 2 that is a split sector on the medium. Data subsequent to this user data is written after a servo sector. A unit of X3 is a byte, which corresponds to reference numeral 705 in Fig. 7. Symbol X4 indicates a period of time from the top of a data sector which does not include a split sector to the top of the next data sector. A unit of X4 is a clock, which corresponds to reference numeral 706 in Fig. 7.

It is to be noted that as for the clock, if the timing can be determined, a reference clock or a data write reference clock of a circuit may also be used. It is desirable to use a timing counting clock for generating a data sector pulse, which indicates the timing of the top of a data sector, with the falling edge of a servo gate signal being used as a reference point. It is not desirable to use a byte clock of user data. It is because although a byte clock is generated by a reference clock on the circuit side during write operation, a pattern of the SYNC area causes a byte clock to fluctuate during read operation. Moreover, if a defect of a medium, or the like, causes a byte clock to be out of normal range, a problem arises; for example, a position of a subsequent data sector deviates. Accordingly, there is a possibility that it will not be able to perform a read. Therefore, a byte clock of user data is not desirable. As a matter of course, if the design is made with these points being taken into consideration, there is no problem. As described above, the FORMAT of the data sector can be expressed.

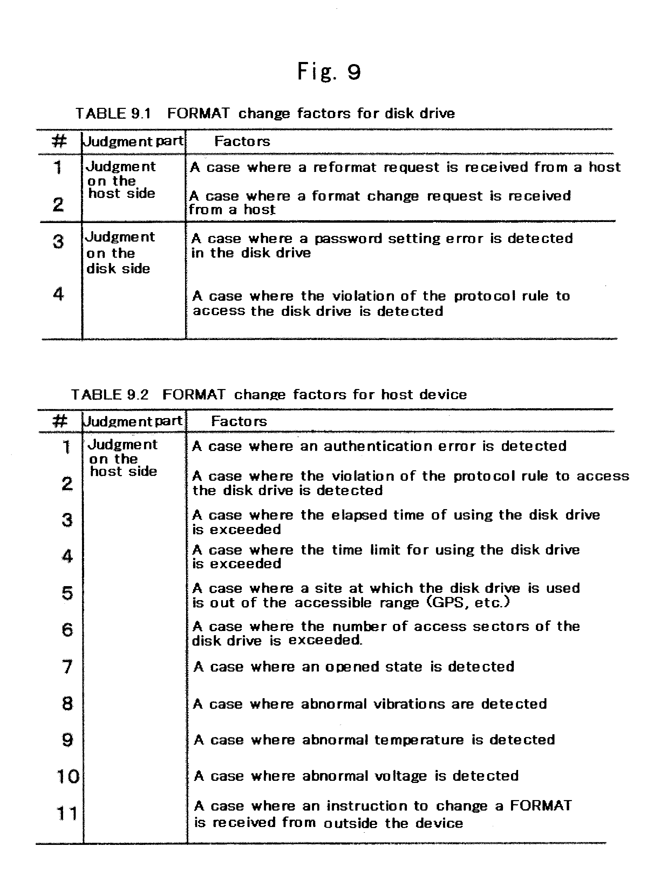

Fig. 9 illustrates examples of FORMAT change factors.

There are two kinds of FORMAT change factors: FORMAT change factors derived from the magnetic disk drive; and FORMAT change factors derived from the host device. From the viewpoint of the disk drive, TABLE 9.1 shows FORMAT change judgments in two cases: a case where a FORMAT change is made according to an instruction from the host device; and a case where a FORMAT change is made as a result of a judgment made in the magnetic disk drive.

As for the judgment on the host device side, if a reformat request or a FORMAT change request is received from the host, the magnetic disk drive is required to make a FORMAT change. In addition, as a factor of the judgment on the magnetic disk drive side, if a wrong password, which differs from that preset in the magnetic disk drive, is entered, or if the violation of the rule is detected in relation to access procedures (protocol procedures) from the host device to the magnetic disk drive, the access procedures being preset in the magnetic disk drive, the magnetic disk drive is required to make a FORMAT change.

TABLE 9.2 shows factors of a FORMAT change request and factors of a reformat request, which are based on the judgment on the host device side. As a matter of course, depending on a FORMAT change judgment factor, it is also possible to change the judgment on the host device side to the judgment on the magnetic disk drive side by equipping the magnetic disk drive with a sensing part.

As a result, the FORMAT change and reformat of the magnetic disk drive are judged by the host device equipped with magnetic disk drive, and thereby it is possible to give the magnetic disk drive an instruction of the FORMAT change. Moreover, judging that the magnetic disk drive itself has exceeded a predetermined criterion of judgment and a predetermined permissible value, it is also possible to make a FORMAT change and a reformat change of the magnetic disk drive. Incidentally, judgment factors of FORMAT change shown in Fig. 9 is merely a reference example. Therefore, it is needless to say that a user can set appropriately according to a purpose of use.

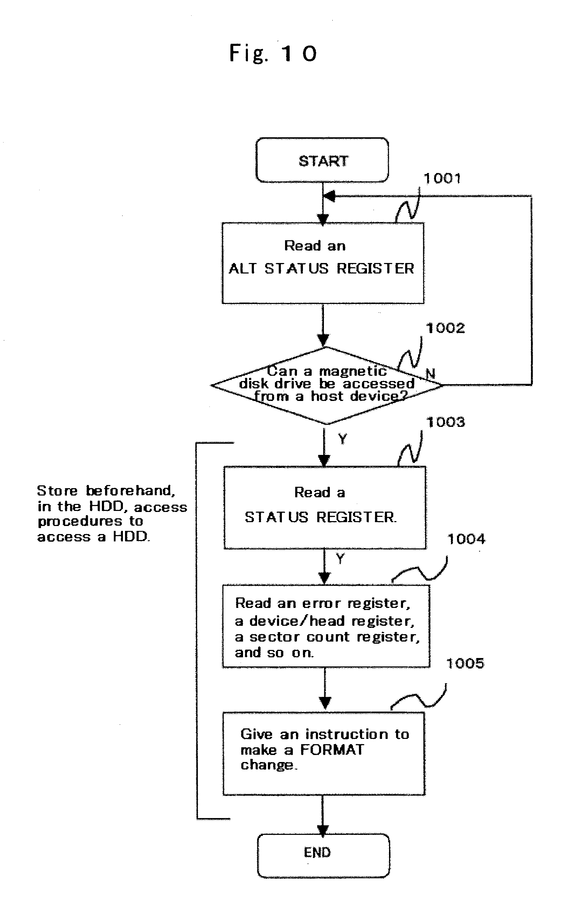

Fig. 10 is a flowchart illustrating protocol procedures by which the magnetic disk drive makes a judgment as to whether or not the host device is allowed to access the magnetic disk drive. When the host device accesses the magnetic disk drive according to the protocol procedures stored beforehand on the magnetic disk drive side, the magnetic disk drive receives from the host device an instruction to make a FORMAT change.

In order to store the protocol procedures in the magnetic disk drive, dedicated commands which are provided on the magnetic disk drive side are used. In another case, the protocol procedures may also be stored beforehand at the time of manufacturing the magnetic disk drive. In this embodiment, the ATA commands are adopted. The ATA commands are standard protocols between the magnetic disk drive 1112 and the host device 1113 shown in Fig. 11 described below. As a matter of course, adopting commands included in the magnetic disk drive also suffices. The protocol procedures shown in Fig. 10 will be described as below.

The host device reads an Alt status register (not shown) in order to check a state of the magnetic disk drive (1001).

Referring to a value of the above register that has been read, the host device makes a judgment as to whether or not the magnetic disk drive is in a state in which the magnetic disk drive can be accessed from the host device (1002). If the magnetic disk drive cannot be accessed from the host device, the host device reads the Alt status register again.

If it is judged that the host device can access the magnetic disk drive, the host device reads a regular status register to check a state of the magnetic disk drive (1003). The host device reads or writes other registers (an error register, a device/head register, a sector count register, and the like) (1004). By writing to a command register a FORMAT change command that is predetermined between the host device and the magnetic disk drive, the host device gives an instruction to make a FORMAT change (1005).

As described above, when the host device gives the magnetic disk drive the instruction to make a FORMAT change, according to the protocols predetermined between the host device and the magnetic disk drive, the magnetic disk drive receives the instruction. Therefore, only the host device having information about the predetermined protocols can give the magnetic disk drive an instruction to make a FORMAT change.

For example, if the magnetic disk drive stores a content on which a time limit for use is put, the host device can judge that the time limit for use of the content has expired. In this case, if the host device gives the magnetic disk drive an instruction to make a FORMAT change, it is possible to prevent the content from being used after the expiration of the time limit for use.

At this time, by providing the magnetic disk drive with a function of disallowing an access to internal data after the FORMAT change, the magnetic disk drive can keep the internally stored content undeleted. Moreover, only when the host device judges that authorized procedures such as extension procedure have been carried out, the host device gives the magnetic disk drive an instruction to restore the FORMAT according to the predetermined protocol. Further, preparing a command to cancel the prohibition of a data access to the disk drive eliminates the need for the time required to write again the content stored beforehand. This makes it possible to restore the content to an original state in a short period of time. In this case, the magnetic disk drive has only to be provided with a mechanism for storing this state beforehand so that the OFFSET value + the FORMAT basic TABLE according to this embodiment can be restored to a state before the FORMAT change.

For example, as described with reference to Fig. 1, because the generated coefficient history checking part 103 can know the most recently used OFFSET coefficient, it is possible to restore the FORMAT in a short period of time by newly making access from the host device to the magnetic disk drive according to the protocol procedures predetermined between the host device and the magnetic disk drive so that the magnetic disk drive can accept a command to restore the FORMAT.

As a result, the FORMAT cannot be compulsorily restored without knowing the protocol procedures predetermined between the host device and the magnetic disk drive. Accordingly, complicating this protocol makes it possible to prevent the FORMAT from being easily restored. However, the authorized host device knowing this protocol can restore the FORMAT.

As a matter of course, the magnetic disk drive may also be provided with the mechanism by which the host device gives the magnetic disk drive the information used to control the FORMAT. Accordingly, for example, by use of a rental medium with a time limit for a content and the magnetic disk drive according to this embodiment, it is possible to instruct the magnetic disk drive to make a FORMAT change that makes it difficult to access from the host device after the time limit.

Here, if the content is left unoverwritten in the magnetic disk drive, issuing from the host device an instruction to restore the FORMAT makes it possible to read out the content of the magnetic disk drive again. This eliminates the need for sparing the time to write the content again to the magnetic disk drive, making it possible to realize a magnetic disk drive with enhanced usability.

As a result of the above processing, it is possible to change a FORMAT of the magnetic disk drive, and to restore the changed FORMAT to a state before the change.

Fig. 11 is a diagram illustrating a configuration of a magnetic disk drive according to this embodiment.

A read/write device 1112 and a host device 1113 are connected through a standard interface, e.g., the ATA protocol. A write command to write data is transmitted from the host device 1113 to the read/write device 1112 through the above-mentioned interface. The write command is received by the host bus I/F controller (HBI) 1110 in a data processing unit 1102 of the read/write device 1112. The write command is then transmitted to a MPU 1105 where the write command is interpreted. As a result, the MPU 1105 judges the write command to be an instruction to write data to a specified sector in the read/write device 1112, and then starts a preparation step for writing to the sector specified by the host device.

A mechanical part 1114 includes a recording medium 1121, a head 1122, a VCM (Voice Coil Motor) 1115 for driving the head 1122, and a spindle motor 1116 for rotating the recording medium 1121.

Upon receipt of an instruction from the MPU 1105, a mechanics controller 1111 instruct a motor driver (not shown) to control the mechanical part 1114 by use of a position signal from a R/W circuit 1101 so that the head 1122 is positioned at a specified track on the recording medium 1121.

Write data is transmitted between the host device 1113 and the host bus I/F controller (HBI) 1110 according to the above-mentioned protocol, and it is temporarily stored in the data buffer 1109 via the host bus I/F controller (HBI) 1110 and a buffer controller (BM) 1107 according to the above-mentioned protocol.

With the object of positioning the head 1122, data of a servo area, which has been read out from the medium 1121, is transmitted as serial pulse data to an ID generation part 1123 through the R/W circuit 1101. The ID generation part 1123 detects a byte sync from serial data of a servo ID part provided from the R/W circuit 1101, and thereby performs serial-to-parallel conversion. The ID generation part 1123 calculates a physical data sector number from a servo ID value that has been correctly read out, and then calculates a logical number after defect processing. The ID generation part 1123 transmits the calculated logical sector number to a disk formatter controller (DF) 1103. Consequently, data is written to a given sector, and then a NRZ (Non Return to Zero) signal is converted into an analog signal in the R/W circuit 1101 before the analog signal is written on a medium.

Here, the disk formatter controller (DF) 1123 controls the passing of user data among the buffer controller (BF) 1107, the R/W circuit 1101, and the ECC processing unit 1106 for performing ECC arithmetic operation. As a result of the control, data is aligned so that a data pattern in accordance with a format used to store data on the medium 1121 can be achieved on the medium 1121, more specifically, so that a pattern of a data sector to which ECC, CRC, and the like is added as shown in Fig. 7 can be achieved on the medium 1121. Then, the data is output to the R/W circuit 1101.

On the other hand, when data is read out, judging from the data sector pattern that has been read out, the disk formatter controller (DF) 1123 outputs a required data part to the ECC processing unit 1106 and the buffer controller 1107. This makes it possible to perform the format conversion so that user data can be handled in the read/write device.

Write data from the data buffer 1109 is written to the medium 1121 through the disk formatter controller (DF) 1103. When data is read out from the medium, the ECC processing unit 1106 adds an ECC code to the data on a sector basis. The ECC code enables data check and correction. In addition, the ID generation part 1123 checks whether or not slip processing should be performed in a defect sector detected after the written sector. This makes it possible to write user data to a target data sector. To read out the user data, the above steps have only to be reversed.

In this embodiment, a FORMAT TABLE is generated by the FORMAT management part 1125 of the data processing unit 1102. With reference to the operation mode 1126, the FORMAT management part 1125 keeps track of a FORMAT basic TABLE adopted by the read/write device 1112. The operation mode 1126 has been described above with reference to Fig. 1. From the host bus I/F controller 1110 instructed by the host device 1113, the FORMAT management part 1125 receives an instruction of the operation mode. The configuration of the FORMAT management part 1125 has been described above with reference to Fig. 1. The FORMAT change judgment part 101 needs to make a judgment as to whether a FORMAT should be changed. The FORMAT change judgment factors are as described with reference to Fig. 9. This information, that is to say, FORMAT change judgment factors 1127, is used for a judgment made by the FORMAT change judgment part 101 in the FORMAT management part 1125. As described with reference to Figs. 1, 2, and others, a new FORMAT TABLE 107 is generated according to change steps for the case where the FORMAT change is required. According to the operation mode 1126, the FORMAT basic TABLE selection part 104 determines a FORMAT basic TABLE to be adopted. Through an internal BUS 1128 and the buffer controller (BM) 1107, the newly generated FORMAT TABLE 107 is stored in a specified area of the data buffer 1109. The specified area is specified by the MPU 1105. After that, by use of the generated FORMAT TABLE 107, the ID generation part 1102 generates information about the timing of a data sector position and about the FORMAT control, and then transmits this value to the disk formatter controller 1103. As a result, writing and reading of user data on the recording medium 1121 is achieved. The FORMAT basic TABLE 105, the generated coefficient history checking part 103, and the like, are stored in the FORMAT management part 1125 in a nonvolatile manner. As a matter of course, for example, an area of the FLASH 1124 of the read/write device 1112 may also be made use of by the MPU 1105. In addition, the same function as that of the FORMAT management part 1125 can also be achieved by control firmware of the MPU 1105. When the function of the FORMAT management part 1125 is achieved in this embodiment, no limit is placed on processing by hardware, firmware, the association of hardware with firmware, or the like.

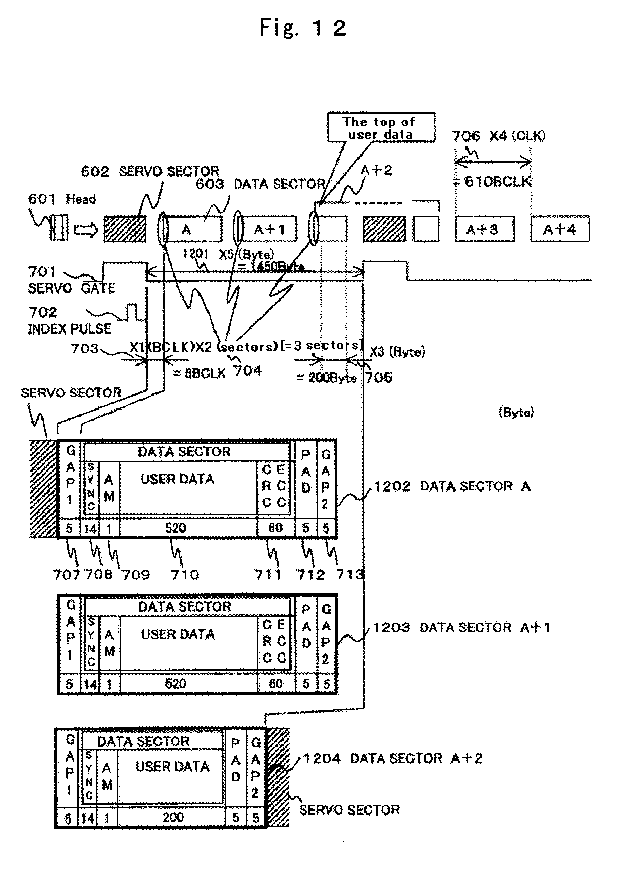

A specific example of the FORMAT TABLE generation will below be described with reference to Figs. 12, 13, 14 and 15. It is to be noted that reference numerals similar to those used in Figs. 6, 7, and 8 are used in the description. Moreover, user data in the data processing unit 1102 shown in Fig. 11 is described as a byte clock (hereinafter referred to as BCLK), that is to say, a unit of one byte. Here, the description is based on the assumption that the BCLK does not fluctuate while data is read or written. A reference clock of circuit operation of the read/write device 1112 is assumed to be made from a period of an oscillator.

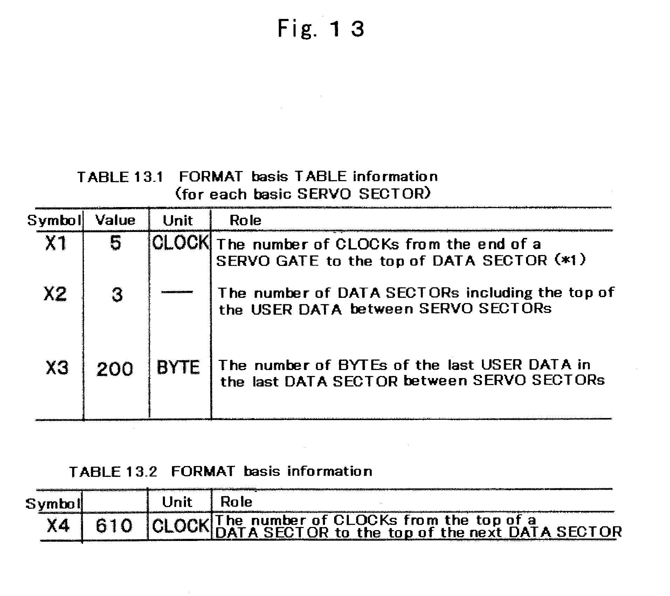

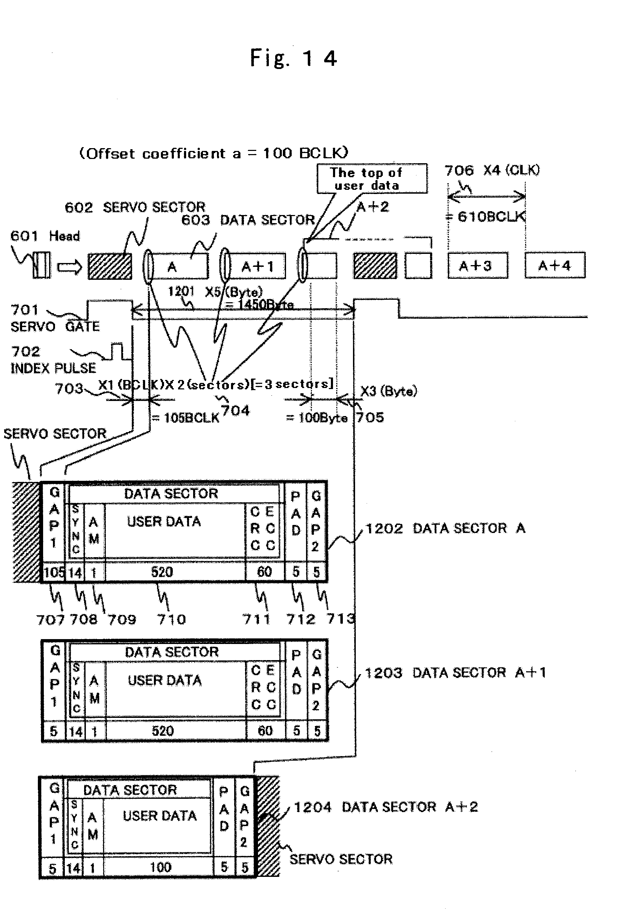

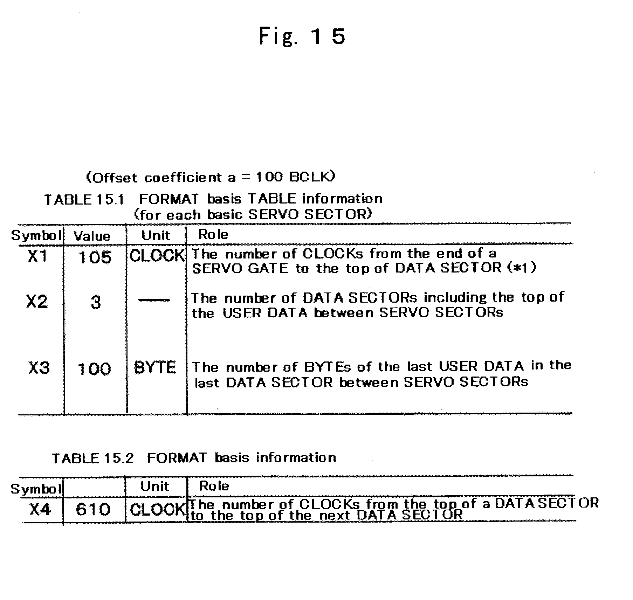

As shown in Fig. 12, if an interval X5 (1201) between servo sectors 602 is 1450 bytes, a specific format between the servo sectors is a format as illustrated by a data sector A (1202), a data sector A + 1 (1203), and a data sector A + 2 (1204). Fig. 13 illustrates FORMAT TABLEs corresponding to the data format in Fig. 12. In contrast with the data format shown in Fig. 12, Fig. 14 illustrates a data format in a case where an offset coefficient α = 100 BCLK. Fig. 15 illustrates FORMAT TABLEs corresponding to the data format shown in Fig. 14.

As shown in Fig. 15, a data area between the servo sector provides a FORMAT in which data is shifted backward only by the offset coefficient α = 100 BCLK. Accordingly, by reducing the length of a user data area of the last data sector A + 2 between the servo sectors in question from 200 bytes to 100 bytes, it is possible to prevent a servo sector area from being overwritten by the data sector A + 2. This makes it possible to generate a new FORMAT TABLE. Here, because an area corresponding to the latter half of the data sector A + 2 is stored in the first data area of the next interval between servo sectors, the remaining user data (420 bytes) is stored there. Thus, paying attention to the fact that a format of the next interval between servo sectors is changed, a format of a data sector is made.

The description is given as above using BCLK as an example. A clock to be adopted may be a clock that is easy to use in the read/write device 1112 shown in Fig. 11, and that is easy to use for circuit control (for example, a servo clock). In this case, needless to say, from a period between clocks, X5 between physically existing servo sectors should not be exceeded.

Thus, a new FORMAT TABLE can be realized, and this makes a FORMAT differing from that used in a fixed period of time predetermined in the past. Therefore, it is possible to generate a FORMAT TABLE by which it is difficult to read out data previously stored. Accordingly, it is possible to realize a disk drive that can carry out the work in a short time to prevent without fail previously stored data from being read out.

It is to be noted that in this embodiment, a magnetic disk drive is used as a read/write device for the sake of convenience of description. However, this embodiment is not limited to the magnetic disk drive. This embodiment can also be applied to a removable disk device or an optical disk drive, which uses a portable medium. Furthermore, it is possible to allow a disk drive main body to recognize a FORMAT of a portable medium by using an ID specific to the portable medium, writing a history of a FORMAT to the portable medium, or the like.

## Claims

1. A read/write device comprising:
a medium for storing data;
a drive unit for rotating the medium;
a head for reading and writing data on the medium; and
a data processing unit comprising:
a format change judgment part for judging a change factor of a format of data stored in the medium;
an offset coefficient generation part for, according to an instruction from the format change judgment part, generating a specified offset coefficient for a format table corresponding to the format; and
a format table generation part for, according to the offset coefficient and the format table, generating a format table that differs from said format table.

2. Read/write device comprising:
a medium for storing data;
a drive unit for rotating the medium;
a head for reading and writing data on the medium; and
a data processing unit comprising:
an offset coefficient generation part for generating a specified offset coefficient for a format table corresponding to the format, according to an instruction from a host device connected to the read/write device, said host device having a format change judgment function of judging a change factor of a format of data stored in the medium; and
a format table generation part for, according to the offset coefficient and the format table, generating a format table that differs from said format table.

3. A read/write device according to Claim 1 or 2, further comprising a generated coefficient history checking part for storing an offset coefficient generated by the offset coefficient generation part.

4. A format management method for managing a format of data stored in a recording medium included in a read/write device, said format management method comprising the steps of:
judging a change factor of a format of data stored in the recording medium;
according to the judgment of the change factor of the format, generating a specified offset coefficient for a format table corresponding to the format; and
according to the offset coefficient generated and the format table, generating a format table that differs from said format table.

5. A format management method according to Claim 4, wherein the judgment of the change factor of the format is made by a host device that is connected to the read/write device.

6. A format management method according to Claim 4, wherein the judgment of the change factor of the format is made by the read/write device.

7. A format management method according to Claim 4, wherein the change factor of the format is based on a violation of a protocol between the read/write device and a host device connected to the read/write device.

8. A format management method according to Claim 4, wherein said generated offset coefficient is stored in the read/write device.
